# EUROPEAN PATENT APPLICATION

(11) **EP 4 353 791 A1**
(43) Date of publication of application: **17.04.2024**
(21) Application number: 23202075.0
(22) Date of filing: 06.10.2023
(51) Int. Cl.: C09J 7/25

(54) **A SUSTAINABLE ADHESIVE TAPE AND APPLICATION THEREOF**

(30) Priority: 10.10.2022 CN 202211236964
(71) Applicant: TESA SE, 22848 Norderstedt (DE)
(72) Inventor: LU, Qin, Suzhou (CN); BARGMANN, Renke, Suzhou (CN); LIU, Na, Suzhou (CN); CHEN, Xiaobo, Suzhou (CN); WANG, Wei, Suzhou (CN)
(74) Representative: tesa SE

(57) **Abstract**

The invention relates to a sustainable adhesive tape and its application. In particular, the present invention discloses a sustainable adhesive tape, and the adhesive tape comprises the following structures in turn: an optional first release film; a first adhesive layer; a substrate layer; a second adhesive layer; and an optional second release film wherein the substrate layer is a PCR PET layer. The adhesive tape has excellent adhesive properties and is environmentally friendly.

## Description

### TECHNICAL FIELD

The invention relates to the field of adhesive tape, in particular to a sustainable adhesive tape and its application.

### BACKGROUND ART

At present, electronic products are closely related to people's daily life. With the integration and miniaturization of electronic products, the assembly process of electronic products will inevitably use a large number of adhesive tapes. Therefore, there is also a wide demand for adhesive tapes in the market.

Traditional adhesive tape needs to have excellent adhesive properties, shear properties and other mechanical properties, the current commercial adhesive tape is mainly petroleum-based, that is, non-biobased, this kind of adhesive tape can basically meet the market requirements for the mechanical properties of the adhesive tape.

However, with the increasing global energy crisis, the market demand for sustainable, recyclable and renewable is also increasing. The existing petroleum-based adhesive tape can no longer meet the increasing demand of the market.

Therefore, it is of great significance to seek and develop a new, more environmentally friendly, renewable, recyclable and sustainable adhesive tape.

### SUMMARY OF THE INVENTION

The object of the present invention is to provide a sustainable adhesive tape and its application. In the first aspect of the present invention, a sustainable adhesive tape is provided, and the adhesive tape comprises the following structures in turn:
an optional first release film;
a first adhesive layer;
a substrate layer;
a second adhesive layer;
an optional second release film;
the substrate layer is a PCR PET layer;
the PCR PET layer has one or more characteristics selected from the group consisting of:
   1) the shrinkage rate of the PCR PET layer after being heated at 150 °C for 15 mins is <=2 % in the machine direction MD and is <=0.5 % in the vertical direction CD;
   2) the tensile strength of the PCR PET layer is >=18N/cm in the machine direction MD and is >=18 N/cm in the vertical direction CD;
   3) the stretch rate of the PCR PET layer is >= 65 % in the machine direction MD and is >= 60 % in the vertical direction CD.

In another preferred embodiment, the shrinkage rate of the PCR PET layer after being heated at 150°C for 15mins is 0-2 % in the machine direction MD and is 0-0.5 % in the vertical direction CD.

In another preferred embodiment, the tensile strength of the PCR PET layer is 18-35 N/cm in the machine direction MD and is 18-30 N/cm in the vertical direction CD.

In another preferred embodiment, the stretch rate of the PCR PET layer is 65-125 % in the machine direction MD and is 60-90 % in the vertical direction CD.

In another preferred embodiment, the adhesive of the first adhesive layer and/or the adhesive of the second adhesive layer is a biobased acrylic adhesive; and/or the adhesive tape has a biobased content of 30-85 %.

In another preferred embodiment, the first release film and/or the second release film is a silicone coated PCR PET layer.

In another preferred embodiment, the adhesive tape comprises the following structures in turn:
an optional first release film having a thickness t1 of 5-38 µm;
a first adhesive layer having a thickness t2 of 3-50 µm;
a substrate layer having a thickness t3 of 5-60 µm;
a second adhesive layer having a thickness t4 of 3-50 µm;
an optional second release film having a thickness t5 of 40-65 µm.

In another preferred embodiment, when the adhesive tape is made into a roll, the first release film is located on the inside, and the second release film is located on the outside;
the ratio of the thickness t1 of the first release film to the thickness t5 of the second release film is 0.2-0.8.

In another preferred embodiment, the first release film has a thickness t1 of 10-30 µm; and/or the second release film has a thickness t5 of 40-60 µm.

In another preferred embodiment, the first adhesive layer has a thickness t2 of 5-45 µm.

In another preferred embodiment, the first adhesive layer has a thickness t2 of 7-44 µm.

In another preferred embodiment, the second adhesive layer has a thickness t4 of 5-45 µm.

In another preferred embodiment, the second adhesive layer has a thickness t4 of 7-44 µm.

In another preferred embodiment, the substrate layer has a thickness t3 of 7-40 µm.

In another preferred embodiment, the substrate layer has a thickness t3 of 9-20 µm.

In another preferred embodiment, the first release film has a thickness t1 of 10-30 µm; and/or the second release film has a thickness t5 of 40-60 µm.

In another preferred embodiment, the adhesive tape has a thickness of 20-160 µm.

In the second aspect of the present invention, an adhesive assembly is provided, the adhesive assembly comprises a first assembly, a second assembly and the adhesive tape of the first aspect of the present invention; the first assembly and the second assembly are bonded by the adhesive tape of the first aspect of the present invention.

It should be understood that in the present invention, any of the technical features specifically described above and below (such as in the Examples) can be combined with each other, so as to constitute new or preferred technical solutions which will not redundantly be described one by one herein.

### DESCRIPTION OF FIGURES

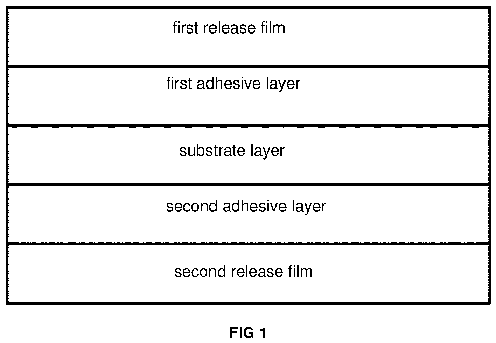

Figure 1 is a structural diagram of the adhesive tape of the present invention.

### DETAILED DESCRIPTION OF THE INVENTION

Through long-term and in-depth research, the present inventors have obtained a sustainable adhesive tape through material optimization and/or structure optimization, which not only has the excellent adhesive properties, peeling properties, shearing properties and other properties of petroleum-based adhesive tapes, but also has excellent environmental protection properties such as sustainability, renewability, recyclability and the like, and is particularly suitable for the new market demand for adhesive tapes. On this basis, the inventors have completed the present invention.

### TERMS

As used herein, the terms "contains" or "includes (comprises)" may be open ended, semi-close ended and close ended. In other words, the terms also include "consisting essentially of" or "consisting of".

As used herein, the term "biobased materials" refers to new materials and chemicals produced by using renewable substances, such as grains, beans, trees, straws and other plants and their residues and inclusions as raw materials, including basic chemicals such as organic acids, bio-alcohols, olefins, and alkanes obtained by processes such as biological processing, biosynthesis and biorefinery, it also includes plastic products such as bio-fiber, bio-plastic, biobased rubber, sugar engineering products, etc.

As used herein, the term "petroleum-based material" means that the raw material is derived from petroleum, and the product is obtained by fractionation, cracking the petroleum, and acrylic acid is obtained by a series of reactions and copolymerization of such product. As a chemical fuel, petroleum is not only a non-renewable resource, but also emits a large amount of carbon dioxide in the process of its exploitation and use, leading to global warming, while increasing the sulfur content in the air, causing acid rain, and causing harm to soil and plants.

The English abbreviations used herein have the following meanings:
PET: polyethylene terephthalate
PCR: Post Customer Recycled, i.e. post-consumer plastics, recyclable/renewable materials
PCR PET: PET recycled after consumption
SUS: stainless steel
PC: polycarbonate

### Existing petroleum-based adhesive tape

Double-sided adhesive tape is mainly composed of substrate, release paper and two layers of adhesive film, and single-sided adhesive tape is mainly composed of substrate and one layer of adhesive film. Petroleum is first fractionated and cracked to obtain products. acrylic acid is obtained by a series of reactions and copolymerization of such products. As a chemical fuel, petroleum is not only a non-renewable resource, but also emits a large amount of carbon dioxide in the process of its exploitation and use, leading to global warming, while increasing the sulfur content in the air, causing acid rain, and causing harm to soil and plants.

The adhesive film of the existing petroleum-based adhesive tape mainly uses the above-mentioned acrylic acid derived from petroleum to prepare the adhesive, and the substrate is also prepared by petroleum-based materials.

### Sustainable adhesive tape

The invention provides a sustainable adhesive tape, and the adhesive tape comprises the following structure in sequence:
an optional first release film;
a first adhesive layer;
a substrate layer;
a second adhesive layer;
an optional second release film.

In another preferred embodiment, the adhesive tape comprises the following structures in turn:
an optional first release film having a thickness t1 of 5-38 µm;
a first adhesive layer having a thickness t2 of 3-50 µm;
a substrate layer having a thickness t3 of 5-60 µm;
a second adhesive layer having a thickness t4 of 3-50 µm;
an optional second release film having a thickness t5 of 40-65 µm.

In another preferred embodiment, the composition of the first adhesive layer and that of the second adhesive layer are the same or different.

In another preferred embodiment, the adhesive of the first adhesive layer and/or the adhesive of the second adhesive layer are a biobased acrylic adhesive.

In another preferred embodiment, the composition and properties of the biobased acrylic adhesive are referred to in tesa patent application WO 2022/034247A1.

In another preferred embodiment, the biobased acrylic adhesive has a biobased content of 10-95 %, which means that the desired biobased content is achieved by adjusting the ratio of base polymer and adding tackifier.

In another preferred embodiment, the biobased acrylic adhesive has a biobased content of 30-90 %, preferably 50-85 %, more preferably 60-80 %, preferably 75 %.

In another preferred embodiment, the substrate layer (Backing) is a PCR PET layer, which is 100 % regenerated PET.

In another preferred embodiment, the PCR PET layer has the following composition and properties: Recyclable materials refer to domestic waste suitable for recycling. The preferred recycled material here is PET film regenerated after use. Compared with other film materials, PET has low water absorption, good oil and solvent resistance, excellent impact resistance, good transparency, and good dimensional stability. PCR PET used in the present invention comes from PET bottles for consumption, which are recycled mechanically and chemically and then made into films. Through the analysis and calculation of the third-party notary unit: Industrial Research Institute, PCR PET can save about 31.8 % carbon emissions compared with PET of general specifications.

In another preferred embodiment, the PCR PET is prepared by recovering PET bottles, cleaning and slicing, making monomers by both chemical and physical recovery processes to polymerize plastic particles, and finally melting, extruding and stretching to form a film.

It should be understood that the PCR PET of the present invention is either commercially available or prepared by methods familiar to those skilled in the art.

In another preferred embodiment, the shrinkage rate of the PCR PET layer after being heated at 150 °C for 15 mins is ≤ 2.0 % in the machine direction MD, preferably ≤ 1.0 %, more preferably ≤ 0.7 %, preferably 0-0.7 %.

In another preferred embodiment, the shrinkage rate of the PCR PET layer after being heated at 150 °C for 15 mins is ≤ 0.5 % in the vertical direction CD, preferably ≤ 0.3 %, more preferably ≤ 0.2 %, preferably 0-0.2 %.

In another preferred embodiment, the tensile strength of the PCR PET layer is >= 18 N/cm in the machine direction MD, preferably >= 20 N/cm, more preferably >= 23 N/cm, preferably 18-35 N/cm. In another preferred embodiment, the tensile strength of the PCR PET layer is >= 18 N/cm in the vertical direction CD, preferably >= 20 N/cm, more preferably >= 23 N/cm, preferably 18-30 N/cm.

In another preferred embodiment, the stretch rate of the PCR PET layer is >= 65 % in the machine direction MD, preferably >= 80 %, more preferably >= 100 %, preferably 65-125 %.

In another preferred embodiment, the stretch rate of the PCR PET layer is >= 60 % in the vertical direction MD, preferably >= 70 %, preferably 60-90 %.

In another preferred embodiment, the color of the PCR PET layer is not limited and may be black or transparent.

In another preferred embodiment, the thickness t1 of the first release film is 15-30 µm, preferably 20-25 µm.

In another preferred embodiment, the thickness t5 of the second release film is 40-55 µm, preferably 45-50 µm.

In another preferred embodiment, the composition and/or structure of the first release film and that of the second release film are the same or different.

In another preferred embodiment, the first release film and/or the second release film comprises the following structure:
1) base membrane;
2) silicone layer (preferably 0.2g/m²), the silicone layer is attached to the base membrane.

In another preferred embodiment, the base membrane is located on the outermost side of the adhesive tape, and the silicone layer is attached to the first adhesive layer and/or the second adhesive layer.

In another preferred embodiment, the silicone of the silicone layer is a modified polydimethylsiloxane. After being cured at a low temperature, the release force of the release film of the present invention is relatively stable at various speeds, and a low gram weight can achieve a better release ability, with high production efficiency and strong economic advantages.

In another preferred embodiment, the base membrane is a PCR membrane, preferably PCR PET.

In another preferred embodiment, the thickness of the base membrane is 10-60 µm, preferably 15-50 µm, more preferably 20-50 µm.

In another preferred embodiment, the application amount of the silicone layer is 0.06-2.2g/m², preferably 0.1-0.8 g/m², more preferably 0.2-0.5 g/m².

In another preferred embodiment, the first release film has one or more features selected from the group consisting of:
1) the range of the release force is 1 ~ 10 cN/cm, preferably 1 ~ 7 cN/cm, and more preferably 1 ~ 4 cN/cm;
2) the bond loss rate is 0-20 %, preferably 3-15 %, and more preferably 5-12 %.

In another preferred embodiment, the second release film has one or more features selected from the group consisting of:
1) the range of the release force is 2 ~ 30 cN/cm, preferably 2 ~ 15 cN/cm, more preferably 2 ~ 10 cN/cm;
2) the bond loss rate is 2-20 %, preferably 3-15 %, and more preferably 4-10 %.

It should be understood that in the present invention, the thickness t1 of the first release film is smaller than the thickness t5 of the second release film. When the adhesive tape is made into a roll, the first release film is located on the inner side and the second release film is located on the outer side, which can effectively reduce the deformation of the adhesive tape under force.

In another preferred embodiment, the first release film has a thickness t1 of 10-30 µm; and/or the second release film has a thickness t5 of 40-60 µm.

In another preferred embodiment, the ratio of the thickness t1 of the first release film to the thickness t5 of the second release film is 0.4-0.6.

In another preferred embodiment, the thickness of the adhesive tape is 25-140 µm, preferably 30-120 µm.

In another preferred embodiment, the biobased content of the adhesive tape is 40-70 %.

In another preferred embodiment, the adhesive tape has one or more properties selected from the group consisting of:
1) the initial peeling force of the adhesive tape is 3-15 N/cm, preferably 5-12 N/cm, and more preferably 6-10 N/cm;
2) the 14-day peeling force of the adhesive tape is 5-20N/cm, preferably 7-15 N/cm, and more preferably 7.5-12 N/cm;
3) the static shear force of the adhesive tape is > 10000 min;
4) the push-out force of the adhesive tape is 150-500 N, preferably 200-400 N, and more preferably 220-360 N;
5) the biobased content of the adhesive tape is 35-80 %, preferably 40-70 %, and more preferably 40-65 %;
6) the regeneration ratio of the adhesive tape is 50-100 %, preferably 55-95 %, more preferably 56-90 %.

In another preferred embodiment, the adhesive tape may be prepared using various methods well known in the art.

### Adhesive Assembly

The invention also provides an adhesive assembly comprising a first assembly, a second assembly and the adhesive tape; the first assembly and the second assembly are bonded by the adhesive tape.

In another preferred embodiment, the adhesive assembly is a component of an electronic product selected from the group consisting of a mobile phone and a tablet computer.

Compared with the prior art, the present invention has the following main advantages:
(1) The adhesive tape not only has excellent adhesive properties, shear properties, push-out properties and other mechanical properties, but also has excellent recyclability, renewability and sustainability and other environmental protection properties, and is an adhesive tape having very excellent comprehensive performance, and can fully meet the market demand for sustainable adhesive tape;
(2) The adhesive tape can be widely used for assembling and covering electronic products.

The present invention will be further illustrated below with reference to the specific examples. It should be understood that these examples are only to illustrate the invention but not to limit the scope of the invention. The experimental methods with no specific conditions described in the following examples are generally performed under the conventional conditions, or according to the manufacture's instructions. Unless indicated otherwise, percentage and parts are calculated by weight.

Unless otherwise defined, all professional and scientific terminology used in the text have the same meanings as known to the skilled in the art. In addition, any methods and materials similar or equal with the recorded content can apply to the methods of the invention. The method of the preferred embodiment described herein and the material are only for demonstration purposes.

### General raw materials

1) PCR PET, it has a thickness of 12/23/25/50 µm, is made of polyethylene terephthalate, has a biobased content of 0 % and a regeneration ratio of 100 %;
2) Biobased acrylic adhesive has a biobased content of about 75 %, and the balance is petroleum-based materials;
3) release film, in which, 0.2 g/m² silicone is coated on 23 µm/ 25 µm /50 µm 100 % PCR PET film to make a single-sided release film;
4) Petroleum-based acrylic adhesive is composed of acrylate, methacrylate, acrylic acid, and tackifying resin, and has a biobased content of 20 % and a regeneration ratio of 0 %;
5) Conventional petroleum-based PET, it is purchased from Mitsubishi, has a thickness of 12 µm, is made of polyethylene terephthalate, has a biobased content of 0 % and a regeneration ratio of 0 %;
6) Commercially available PCR PET, it has a thickness of 12 µm, is made of polyethylene terephthalate, and has a biobased content of 0 % and a regeneration ratio of 100 %.

### General test method

### Peeling force

180° peel is the most conventional method used to evaluate the peel strength of pressure-sensitive adhesive and is used in our product development and verification: under 23±1 °C, 50±5 % humidity environment, the adhesive tape is cut into 25mm wide * 20 cm long spline, and the non-test surface is coated on 25 µm PET reinforced film for testing. The ASTM standardized steel sheet is wiped with a cleaning solvent such as acetone and let it stand in the air for 1 minute. The surface to be tested is pasted on the steel plate, and is rolled 2 times back and forth with a 2 kg rubber roller at a speed of 600mm/min. Zwick tensile tester is used to peel at a speed of 300 mm/min at an angle of 180 °, and the average value of the three parallel samples is taken in N/cm.

### Environmental resistance test

Same as the peeling force to prepare the sample, a group of compressed samples is placed in - 40-85 °C, hot and cold shock cycle 100 times with each cycle is 1 hour (that is, the heating/cooling rate is about 4 °C/min) and then the sample is taken out and stands for 2 hours at 23±1 °C, 50±5 % humidity environment. Zwick tensile tester was used to peel at a speed of 300 mm/min at an angle of 180 °, and the average value of the three parallel samples is taken in N/cm.

Same as the peeling force to prepare the sample, a group of compressed samples is placed in 85 °C, 85 % humidity environment for 500 hours, then the sample is taken out and stands for 2 hours at 23±1 °C, 50±5 % humidity environment. Zwick tensile tester was used to peel at a speed of 300 mm/min at an angle of 180 °, and the average value of the three parallel samples is taken in N/cm.

### Static shear force

Shear creep retention force: under the environment of 23±1 °C and 50±5 % humidity, the adhesive tape is cut into 13mm wide * 20cm long spline, the non-test surface is coated on 50 µm aluminum film for testing, and then is cut into 3 parallel samples about 5cm long. The test steel plate is wiped with a cleaning solvent such as acetone, and then let it stand in the air for 1 minute. The surface to be tested is attached to the 20mm scale mark on the steel plate, the excess length is fixed with paper, and the 2kg steel roller is rolled 2 times back and forth at a speed of 300mm/min. The hook is hung on the paper sheet for use, the screw and nut are fixed on the test steel plate, the test sample is hung on the timer as a whole, a weight of 1kg is placed on the lower hook, and the holding time is recorded.

### Push-out force

Under the environment of 23±1 °C and 50±5 % humidity, the adhesive tape is laser cut into a back-shaped sample with an inner diameter of 29mm * 29mm and an outer diameter of 33mm * 33mm. PC 45mm * 45mm frame and 35mm * 35mm lens are wiped with alcohol and stand for 2 hours. The back-shaped adhesive tape to be tested is bonded to the middle of the frame and the lens, and keep the pressure 248N for 5 seconds. After standing for 24 hours, the push-out test is carried out with a metal push head with a diameter of 19mm at a speed of 10mm/min, and the average value of 5 parallel samples is recorded in N.

### Biobased content

Biobased content is evaluated by BETA Laboratory in the United States according to ASTMD 6866-18. Quantitative evaluation by measuring the radioisotope C14, the higher the value is, the greater the proportion of natural sources in the material is.

### Regeneration ratio

Since tesa uses 100 % recycled substrate and release paper for product design, according to the quality of each component material in the adhesive tape, the regeneration ratio of recycled material in each thickness design can be calculated as follows:
➢ 30 µm d/s tape: 40 %
➢ 50 µm d/s tape: 53 %
➢ 100 µm d/s tape: 63 %

### Thickness

The test instrument is WOLF thickness meter, the test head is a 10mm diameter disc, and the preload pressure is 4N.

### 150°C shrinkage

The thermal stability of the adhesive tape is tested.

Take an adhesive tape having an original width of 150 mm and an original length of 150 mm. Mark a distance of 100 mm long and 100mm wide at the center of the surface of the adhesive tape, for example: draw two lines with a ballpoint pen. Mark the machine direction and the vertical direction (the length direction of the adhesive tape is the machine direction, and the width direction of the adhesive tape is the vertical direction). Then let the adhesive tape hang freely in a 150 °C preheated oven for a specified time and fix it with a paperclip. After 15 minutes, measure the change of the adhesive tape, and calculate according to the formula: (Before heating-after heating)/Before heating * 100 %, the smaller the result is, the higher the thermal stability of the material is.

### Tensile strength

The tensile strength of the sample is tested under specified conditions, and the method is also suitable for both substrates and adhesive tapes.

Under 23±1 °C, 50±5 % humidity environment, before the test, if the sample to be tested is adhesive tape, outermost 3-6 layers of the adhesive tape are firstly removed. The test sample is cut into 200 mm * 10 mm, the adhesive tape is clamped on both ends of zwick tensile tester to ensure that the initial test length is horizontal, the test length is 100mm, the length direction of the adhesive tape is the machine direction, the width direction of the adhesive tape is the vertical direction, the adhesive tape is stretched upward at a speed of 300 mm/min, the fracture value under normal conditions is recorded, and the average value of 5 parallel samples is recorded in N/cm.

### Stretch rate

The elongation at break of the sample under specified conditions is tested, and the method is suitable for both substrates and adhesive tapes.

Under 23±1 °C, 50±5 % humidity environment, before the test, if the sample to be tested is adhesive tape, outermost 3-6 layers of the adhesive tape are firstly removed. The test sample is cut into 200 mm * 10 mm, the spline is clamped at both ends of zwick tensile tester to ensure that the initial test length is horizontal, the test length is 100 mm, the length direction of the adhesive tape is the machine direction, the width direction of the adhesive tape is the vertical direction, the adhesive tape is stretched upward at a speed of 300 mm/min, the elongation at break under normal conditions is recorded, and the average value of 5 parallel samples is recorded in %.

### CO₂ emission

Carbon dioxide emission mainly refer to emissions from manufacturing; indirect emissions from the purchase of electricity, steam, heat and other energy sources; indirect emissions from production of upstream materials. Define the functional units of the calculation object and multiply by the carbon dioxide emission index of raw materials per functional unit. If the calculation object is adhesive tape, add the direct energy consumption and indirect energy consumption per functional unit of the manufacturing process.

### Release force

180° peeling is the most conventional method used to evaluate the release force of pressure-sensitive adhesive release paper and is used in our product development and verification: under 23±1 °C, 50±5 % humidity environment, the outermost 3-6 layers of tested adhesive tape are removed firstly, and the adhesive tape is cut into 20mm wide * 20cm long spline. Since the sample is a double-sided release film adhesive tape, if 23 µm PET is removed firstly, the adhesive surface is pasted on a flat test substrate, and the adhesive surface is peeled off at an angle of 180° at a speed of 300 mm/min with a zwick tensile tester, and the average value of the three parallel samples is taken in cN/cm; then take another new spline, remove 50 µm PET, and stick the adhesive surface on the flat test substrate, the zwick tensile tester is used to peel at a speed of 300 mm/min at an angle of 180°, and the average value of the three parallel samples is taken in cN/cm.

### Bond loss rate

Place the test release paper 16 hours in advance at 23±1 °C and 50±5 % humidity, cut it into a 25 mm wide * 20 cm long release film spline, stick the 20 mm wide tesa 7475 on the side to be detected, and gently smooth it with hands or rubber rollers to avoid air entrainment. The sample is placed on a flat base and uniformly pressed for 24 hours with a pressure of 2 N/cm2 in an oven at 70 °C. After taking it out, let it stand at room temperature for 2 hours and then test it with zwick tension machine. The tesa 7475 is clamped at the upper end, the release film to be detected is clamped at the lower end, the distance between the two ends is controlled to be 50 mm, and then the peel test is conducted at a speed of 300 mm/min, and the test results are recorded in cN/cm. Subsequently, the peeled tesa 7475 is pasted on a clean standard steel plate, tested according to the 180° peel force test method, and recorded as stored PA. Similarly, the fresh tesa 7475 is pasted on the clean standard steel plate, tested according to the 180° peel force test method, and recorded as unstored PA.

Finally, the bond loss rate is calculated: PA loss % = (unstored PA-stored PA)/unstored

PA * 100 %.

### Example 1 adhesive tape 1

The adhesive tape 1 has the following composition and structure:
a first release film: 0.2 g/m² silicone layer coated 23 µm thick PCR PET, the release force is 4cN/cm, the bond loss rate is 11 %;
a first adhesive layer: formed by coating biobased acrylic adhesive, with a thickness of 9 µm;
a substrate layer: 12 µm thick PCR PET, the shrinkage rate after being heated at 150 °C for 15mins is 0.7 % in machine direction MD and is 0.2 % in vertical direction CD; the tensile strength is 25 N/cm in machine direction MD and is 20 N/cm in vertical direction CD; the stretch rate is 104 % in machine direction MD and 70 % in vertical direction CD;
a second adhesive layer: formed by coating biobased acrylic adhesive, with a thickness of 9 µm;
a second release film: 0.2 g/m² silicone layer coated 50 µm thick PCR PET, the release force is 9cN/cm, and the bond loss rate is 5 %.

After the release films on both sides are removed, the adhesive tape 1 has a thickness of 30 µm, is transparent, and has a biobased content of 40 %.

### Example 2 adhesive tape 2

The adhesive tape 2 has the following composition and structure:
a first release film: 0.2 g/m² silicone layer coated 23 µm thick PCR PET, the release force is 4cN/cm, the bond loss rate is 11 %;
a first adhesive layer: formed by coating biobased acrylic adhesive, with a thickness of 19 µm;
a substrate layer: 12 µm thick PCR PET, the shrinkage rate after being heated at 150°C for 15mins is 0.7 % in machine direction MD and is 0.2 % in vertical direction CD; the tensile strength is 25N/cm in machine direction MD and is 20N/cm in vertical direction CD; the stretch rate is 104 % in machine direction MD and 70 % in vertical direction CD;
a second adhesive layer: formed by coating biobased acrylic adhesive, with a thickness of 19 µm;
a second release film: 0.2 g/m² silicone layer coated 50 µm thick PCR PET, the release force is 9cN/cm, and the bond loss rate is 5 %.

After removing the release films on both sides, the adhesive tape 2 has a thickness of 50 µm, is transparent, and has a biobased content of 53 %.

### Example 3 adhesive tape 3

The adhesive tape 3 has the following composition and structure:
a first release film: 0.2 g/m² silicone layer coated 23 µm thick PCR PET, the release force is 4cN/cm, the bond loss rate is 11 %;
a first adhesive layer: formed by coating biobased acrylic adhesive, with a thickness of 44 µm;
a substrate layer: 12 µm thick PCR PET, the shrinkage rate after being heated at 150°C for 15mins is 0.7 % in machine direction MD and is 0.2 % in vertical direction CD; the tensile strength is 25N/cm in machine direction MD and is 20N/cm in vertical direction CD; the stretch rate is 104 % in machine direction MD and 70 % in vertical direction CD;
a second adhesive layer: formed by coating biobased acrylic adhesive, with a thickness of 44 µm;
a second release film: 0.2 g/m² silicone layer coated 50 µm thick PCR PET, the release force is 9cN/cm, the bond loss rate is 5 %.

After the release films on both sides are removed, the adhesive tape 3 has a thickness of 100 µm, is transparent, and has a biobased content of 63 %.

### Comparative example 1 adhesive tape C1 (existing petroleum-based adhesive tape)

a first release film: 0.2 g/m² silicone layer coated 69 µm thick cellophane, the release force is 5 cN/cm, the bond loss rate is 11 %;
a first adhesive layer: formed by coating petroleum-based acrylic adhesive, with a thickness of 19 µm;
a substrate layer: 12 µm thick conventional petroleum-based PET, the shrinkage rate after being heated at 150 °C for 15mins is 1.0 % in machine direction MD and is 0.5 % in vertical direction CD; the tensile strength is 23N/cm in machine direction MD and is 20 N/cm in vertical direction CD; the stretch rate is 90 % in machine direction MD and 70 % in vertical direction CD;
a second adhesive layer: formed by coating petroleum-based acrylic adhesive, with a thickness of 19 µm;
a second release film: 0.2 g/m² silicone layer coated 69 µm thick cellophane, the release force is 5 cN/cm, and the bond loss rate is 11 %.

After removing the release films on both sides, the adhesive tape C1 has a thickness of 50 µm, is transparent, and has a biobased content of 20 %.

### Comparative example 2 adhesive tape C2

Same as Example 2, the difference is that: the substrate layer uses commercially available 12 µm thick 100 % regeneration PCR PET, and the shrinkage rate after being heated at 150 °C for 15mins is 2.5 % in the machine direction MD and 0.7 % in the vertical direction CD; the tensile strength is 16 N/cm in the machine direction MD and 15 N/cm in the vertical direction CD; the stretch rate is 60 % in the machine direction MD and 40 % in the vertical direction CD.

### Performance test results

The performance of the adhesive tapes 1-3 obtained in Examples 1-3 and the adhesive tapes C1 and C2 obtained in Comparative Examples 1-2 are shown in Table 1.

**Table 1**

| | adhesive tape 1 | adhesive tape 2 | adhesive tape 3 | adhesive tape C1 | adhesive tape C2 |
|---|---|---|---|---|---|
| Initial peeling force (N/cm) | 6.6 | 7.6 | 9.4 | 5.3 | 5.0 |
| 14-day peeling force (N/cm) | 6.7 | 8.1 | 9.8 | 6.6 | 5.3 |
| Peeling force after Environment Measurement of High and Low Temperature Cycle (N/cm) | 8.0 | 8.0 | 10.6 | 10 | 6.7 |
| Peeling force after Environment Measurement of High Temperature and High Humidity (N/cm) | 8.1 | 9.4 | 14.5 | 8.2 | 6.4 |
| Static shear force (min) | > 10000 | > 10000 | > 10000 | 4000-1000 | 5560 |
| Push-out force (N) | 237 | 350 | 306 | 177 | 189 |
| Biobased content (%) | 40 | 53 | 63 | 20 | 53 |
| Regeneration ratio of materials used (%) | 86 | 74 | 56 | 0 | 74 |
| Carbon dioxide emission of 1kg wet glue (%), assuming that of C1 is 0 | -30.1 | -30.1 | -30.1 | 0 | -30.1 |

| | | | | | |
|---|---|---|---|---|---|
| * The reduction of carbon dioxide emissions refers to the reduction of carbon dioxide emissions of the biobased adhesive tape of the present invention relative to that of the traditional petroleum-based adhesive tape C1. | | | | | |

As can be seen from Table 1:
1) After storing for 14 days, the peeling force of the adhesive tape of the present invention increases by only 1-6 % (6 % for example 2), the peeling force of the existing petroleum-based adhesive tape increases by up to 24 %, the peeling force of the adhesive tape C2 increases by 6 %; in other words, with the change of time, compared with the existing petroleum-based adhesive tape, the peeling performance of the adhesive tape of the present invention is more stable and more predictable;
2) After environment measurement of high and low temperature cycle, the peeling force of the adhesive tape of the present invention increases by only 5-21 % (5 % for example 2), the peeling force of the existing petroleum-based adhesive tape increases by up to 88 %, the peeling force of the adhesive tape C2 increases by 34 %; in other words, compared with the existing petroleum-based adhesive tape and the adhesive tape C2, the peeling performance of the adhesive tape of the invention is more adaptable and stable to complex and changeable environments, and can be applied to more diverse use environments;
3) After environment measurement of high temperature and high humidity, the peeling force of the adhesive tapes 1-2 of the present invention increases by only 22-23 % (23 % for example 2), the peeling force of the existing petroleum-based adhesive tape increases by up to 54 %, the peeling force of the adhesive tape C2 increases by 28 %; in other words, compared with the existing petroleum-based adhesive tape, the peeling performance of the adhesive tapes 1-2 of the present invention are more stable and more suitable for extreme environments;
4) Compared with the existing petroleum-based adhesive tape and the adhesive tape C2, the adhesive tape of the present invention has significantly excellent static shear force and push-out force, that is, with significantly excellent bonding performance;
5) Due to the poor tensile properties of the 100 % PCR PET used in the adhesive tape C2, the adhesive tape is prone to deformation and the bonding force is dispersed during the test of the peeling force, resulting in a decrease in the result.

The tapes according to the invention use 100 % recyclable PET and acrylic adhesives with extremely high biobased carbon content, which not only meet the innovation of sustainable development in today's society, but also make a positive response to reduce carbon emissions.

The outstanding performance of the tapes according to the invention is mainly manifested in adhesion, cohesion, push-out force, etc., which fully meets the application characteristics of this kind of products promoted in the electronic market.

In addition, the data in the table also well proves that the tapes according to the invention have good environmental resistance, wide application range and good stability.

All literatures mentioned in the present invention are incorporated by reference herein, as though individually incorporated by reference. Additionally, it should be understood that after reading the above teaching, many variations and modifications may be made by the skilled in the art, and these equivalents also fall within the scope as defined by the appended claims.

## Claims

1. A sustainable adhesive tape, wherein the adhesive tape comprises the following structures in turn:
an optional first release film;
a first adhesive layer;
a substrate layer;
a second adhesive layer;
an optional second release film;
the substrate layer is a PCR PET layer;
the PCR PET layer has one or more characteristics selected from the group consisting of:
1) the shrinkage rate of the PCR PET layer after being heated at 150 °C for 15 mins is <=2 % in the machine direction MD and is <=0.5 % in the vertical direction CD;
2) the tensile strength of the PCR PET layer is >=18 N/cm in the machine direction MD and is >=18 N/cm in the vertical direction CD;
3) the stretch rate of the PCR PET layer is >= 65 % in the machine direction MD and is >= 60 % in the vertical direction CD.

2. The adhesive tape of claim 1, wherein the shrinkage rate of the PCR PET layer after being heated at 150 °C for 15 mins is 0-2 % in the machine direction MD and is 0-0.5 % in the vertical direction CD.

3. The adhesive tape of claim 1, wherein the tensile strength of the PCR PET layer is 18-35 N/cm in the machine direction MD and is 18-30 N/cm in the vertical direction CD.

4. The adhesive tape of claim 1, wherein the stretch rate of the PCR PET layer is 65-125 % in the machine direction MD and is 60-90 % in the vertical direction CD.

5. The adhesive tape of claim 1, wherein the adhesive of the first adhesive layer and/or the adhesive of the second adhesive layer is a biobased acrylic adhesive; and/or
the adhesive tape has a biobased content of 30-85 %.

6. The adhesive tape of claim 1, wherein the first release film and/or the second release film is a silicone coated PCR PET layer.

7. The adhesive tape of claim 1, wherein the adhesive tape comprises the following structures in turn:
an optional first release film having a thickness t1 of 5-38 µm;
a first adhesive layer having a thickness t2 of 3-50 µm;
a substrate layer having a thickness t3 of 5-60 µm;
a second adhesive layer having a thickness t4 of 3-50 µm;
an optional second release film having a thickness t5 of 40-65 µm.

8. The adhesive tape of claim 7, wherein when the adhesive tape is made into a roll, the first release film is located on the inside, and the second release film is located on the outside;
the ratio of the thickness t1 of the first release film to the thickness t5 of the second release film is 0.2-0.8.

9. The adhesive tape of claim 7, wherein the first release film has a thickness t1 of 10-30 µm; and/or the second release film has a thickness t5 of 40-60 µm.

10. An adhesive assembly, wherein the adhesive assembly comprises a first assembly, a second assembly and the adhesive tape of claim 1 ;
the first assembly and the second assembly are bonded by the adhesive tape of claim 1.
